(19) Europäisches Patentamt
European Patent Office
Office européen des brevets

(11) Veröffentlichungsnummer: **0 032 693**
**A1**

(12) # EUROPÄISCHE PATENTANMELDUNG

(21) Anmeldenummer: **81100127.0**

(22) Anmeldetag: **09.01.81**

(51) Int. Cl.³: **B 01 D 59/34**

(30) Priorität: **21.01.80 DE 3001981**

(43) Veröffentlichungstag der Anmeldung: **29.07.81 Patentblatt 81/30**

(84) Benannte Vertragsstaaten: **DE FR GB**

(71) Anmelder: **KRAFTWERK UNION AKTIENGESELLSCHAFT, Wiesenstrasse 35, D-4330 Mülheim (Ruhr) (DE)**

(72) Erfinder: **Niemann, Hans-Joachim, Dr., Egerlandstrasse 31, D-8523 Hagenau (DE)**
Erfinder: **Erbe, Wilfried, Am Eichengarten 6, D-8520 Buckenhof (DE)**
Erfinder: **Gajewski, Wolfgang, Dr., Am Ruhesteig 1, D-8520 Buckenhof (DE)**
Erfinder: **Landgraf, Norbert, Am Dachsberg 24, D-8501 Rückersdorf (DE)**
Erfinder: **Leitner, Gunter, Am Europakanal 38, D-8520 Erlangen (DE)**
Erfinder: **Sprehe, Josef, Görlitzer Strasse 8, D-8520 Erlangen (DE)**

(74) Vertreter: **Mehl, Ernst, Dipl.-Ing. et al, Postfach 22 01 76, D-8000 München 22 (DE)**

(54) **Verfahren zur Erzeugung einer am Isotop Uran 235 angereicherten, für die Herstellung von Kernbrennstoffen für Kernreaktoren geeigneten Uranverbindung.**

(57) Gasförmiges $UF_6$ wird zusammen mit Helium und Wasserstoff als Reaktionspartner adiabatisch in einer Düse (7) mit vorgeschaltetem Schnellschlussventil (6) entspannt und mit UV-Licht einer genau bestimmten Frequenz durchstrahlt (8). Für die Bestrahlung werden eine Anzahl von Lasergeräten verwendet, die gleichzeitig gezündet werden, deren Strahlungen jedoch über optische Verzögerungsleitungen nacheinander das Stoffgemisch durchsetzen. Das Reaktionsprodukt $UF_5$ wird mit Hilfe eines Zyklons (10) abgeschieden, die verbleibenden Stoffe abgepumpt (15) und wieder in den Prozess zurückgeführt.

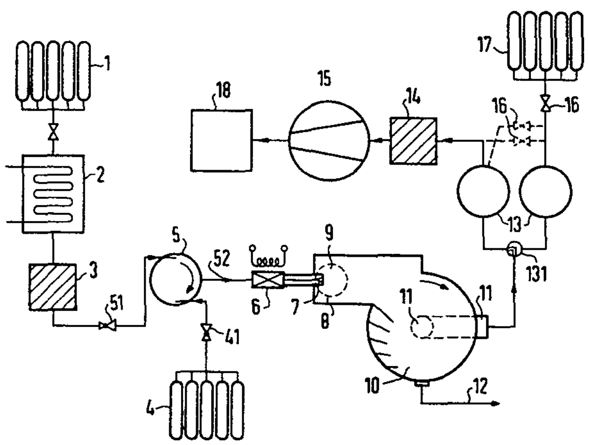


EP 0 032 693 A1

KRAFTWERK UNION AKTIENGESELLSCHAFT Unser Zeichen
VPA 80 P 9303 E

Verfahren zur Erzeugung einer am Isotop Uran 235 angereicherten, für die Herstellung von Kernbrennstoffen für Kernreaktoren geeigneten Uranverbindung

Die vorliegende Erfindung betrifft ein Verfahren zur Erzeugung einer am Isotop Uran 235 angereicherten, für die Herstellung von Kernbrennstoffen für Kernreaktoren geeigneten Uranverbindung, wobei als Ausgangsstoff gasförmiges, natürliches oder abgereichertes Uran in seiner Verbindung $UF_6$ sowie ein ebenfalls gasförmiger Reaktionspartner Verwendung findet und eine Laserstrahlung eine isotopenselektive Anregung bei einer Temperatur unter 100 K zur Auslösung photochemischer Reaktionen bewirkt und die Trennung der Reaktionsprodukte auf physikalischem Wege erfolgt.

Mü 2 Ant / 10.12.1979

Die meisten der heute im Betrieb befindlichen bzw. geplanten Kernkraftwerke arbeiten mit leichtem Wasser als Kühlmittel und Moderator. Die dazu benötigten Kernbrennstoffe müssen aber in ihrem Gehalt am spaltbaren Isotop Uran 235 von 0,7 %, dem natürlichen Anteil, auf etwa 3 % angereichert werden. Diese Anreicherung wird üblicherweise mit Hilfe des Diffusions- oder des Gaszentrifugen-Verfahrens durchgeführt. Beide sind jedoch in den Betriebs- und Anlagekosten sehr aufwendig, das Diffusions-Verfahren braucht darüber hinaus enorme Energiemengen. Ungünstig ist bei diesem Verfahren auch die schlechte Ausnutzung der Natururanvorräte. Je höher der sogenannte Trennarbeitspreis der Anreicherungsanlage ist, umso geringer muß der Trennarbeitsaufwand gehalten werden, was eine schlechte Abreicherung des Ausgangsmaterials um Uran 235 bedeutet, so daß insgesamt gesehen der Anteil des spaltbaren Uran-Isotops im Natururan nur etwa zur Hälfte ausgenutzt werden kann.

Um die genannten Nachteile der koventionellen Verfahren bezüglich der Trennarbeitskosten und der Ausnützung der Vorräte zu beheben, sind etwa seit 1963 über 100 verschiedene Isotopentrennverfahren vorgeschlagen worden, die sich die neue Lasertechnik zunutze machten. Alle diese Laserverfahren beruhen auf der Vorstellung, daß sich die geringen physikalischen Unterschiede zwischen den hauptsächlichsten Uran-Isotopen 235 und 238 auch im jeweiligen optischen Absorptionsspektrum einer entsprechenden Uranverbindung widerspiegeln. Die Unterschiede der Spektren sollten dabei so genutzt werden, daß das Laserlicht einer bestimmten Wellenlänge nur vom Uran-Isotop 235 bzw. einer entsprechenden Verbindung desselben absorbiert wird, nicht jedoch vom Uran-Isotop 238. Diese Erscheinung wird mit Selektivität bezeichnet.

Die verschiedenen bekannt gewordenen Verfahren unterscheiden sich darin, ob Uranmetalldampf (Atomverfahren) oder eine gasförmige Uranverbindung, wie $UF_6$, (Molekülverfahren) bestrahlt wird. Weiterhin darin, ob infrarotes oder ultraviolettes Licht oder beides verwendet wird und ob als Folge der selektiven Anregung des 235 Uran-Atoms bzw. seiner entsprechenden Verbindung eine mechanische, elektrische oder chemische Abtrennung bewirkt wird.

Als Beispiel für das sogenannte "Atom-Verfahren" sei die deutsche Offenlegungsschrift 23 121 94 (Nebenzahl) erwähnt. Nach diesem Vorschlag wird Uranmetall auf über 2000°C erhitzt und der entstehende Urandampf bestrahlt. In Anbetracht der sehr geringen Dampfdrücke ist jedoch der Materialdurchsatz sehr gering, die hohen Temperaturen bringen große Materialprobleme mit sich und schließlich wird die Anregungsenergie in schädlicher Weise sehr schnell auf das 238 Uran übertragen. Obwohl bereits seit Anfang der 70er Jahre an diesen Verfahren gearbeitet wird, ist bis heute von einer Realisierung desselben nichts bekannt geworden.

Die Mehrzahl der auf der selektiven Laseranregung beruhenden Verfahren gehören daher zum Bereich der sogenannten "Molekülverfahren". Allen ist praktisch gemeinsam , daß das Ausgangsmaterial $UF_6$ ist, dies ist die einzige bisher bekannte Uranverbindung, die einen ausreichenden Dampfdruck aufweist und damit die für die Praxis benötigten Materialdurchsätze erlaubt. Alle diese Vorschläge befassen sich mit dem Problem der selektiven Erfassung von Absorptionslinien des einen Uran-Isotops und der Abtrennung desselben mit Hilfe von mechanischen und chemischen oder elektromagnetischen Methoden.

Die Schwierigkeit der selektiven Erfassung des gewünschten Laser-Isotops besteht aber darin, daß sich die Spektren der beiden Uran-Isotopen bei Raumtemperaturen so stark überlappen, daß eine selektive Erfassung des gewünschten Isotops nicht mehr möglich ist. Zur Überwindung dieser Situation wurde im Jahre 1974 in der deutschen Offenlegungsschrift 24 47 762 vorgeschlagen, das zu bestrahlende Dampfgemisch mit Hilfe einer Düse adiabatisch zu entspannen und damit auf unter 100 K abzukühlen. Auf diese Weise gelingt es, einen großen Teil der Schwingungszustände des $UF_6$ zu löschen, so daß nur noch wenige übrig bleiben, damit die Überlappung der sogenannten hot bands zum großen Teil verschwindet und somit eine selektive Erfassung einzelner Absorptionslinien möglich wird. Hinsichtlich der Bestrahlungsfrequenzen sind noch keine genaueren Angaben bekannt geworden, die meisten Verfahren arbeiten mit Infrarotlicht, evtl. zusätzlich noch mit ultraviolettem Licht, um die bereits angeregten Moleküle auf noch höhere Energiestufen zum Zwecke der Ionisation oder Dissoziation anzuheben. Derartige Vorschläge sind beispielsweise in der deutschen Offenlegungsschrift 26 53 795 enthalten. Diese dort gemachten Angaben reichen aber nicht aus, um eine wirtschaftliche Isotopenanreicherung durchzuführen, zumal die benötigten Laserleistungen für einen Dauerbetrieb noch nicht zur Verfügung stehen und somit in Anbetracht der kurzen Impulszeiten der Lasergeräte der theoretisch mögliche Anreicherungsgrad durch die nicht bestrahlten Mengen der Ausgangsstoffe sehr stark verringert wird.

Es stellte sich daher die Aufgabe, ein abgewandeltes Laserverfahren zu entwickeln, das die Herstellung von ca. 3 % angereichertem Uran-Kernbrennstoff im praktischen Maßstab, also im Tonnenmaßstab, erlaubt und das gegenüber dem bekannten Diffusions- und Zentrifugen-Verfahren einen drastisch erniedrigten Trennarbeitspreis bei einer besseren Ausnutzung der Uranvorräte ermöglicht.

Die Lösung dieser Aufgabe besteht in einem Verfahren, bei dem die Ausgangsstoffe mit einem Zusatzgas zur Einstellung des Adiabatenkoeffizienten jeweils für die Dauer von wenigstens einem aus optisch und elektrisch verzögerten Teilstrahlen zusammengesetzten Laserstrahlimpuls adiabatisch auf unter 50 - 100 K in einer Düse

entspannt werden, diese die Düse verlassende "Wolke" vollständig mit einer aus den in der Beschreibung angegebenen Spektren entnehmbarer Wellenlänge (Bande bei 398 nm) bestrahlt wird und das entstehende am Isotop 235 U angereicherte $UF_5$ als Feststoff auf physikalischem Wege abgesondert und die nicht umgewandelten Stoffe durch Kondensation in bekannter Weise rückgewonnen werden. Dieses Verfahren verwendet somit nur eine einzige Laserstrahlung, nämlich im UV-Bereich, und gibt außerdem die Möglichkeit, das Ausgangsstoffgemisch restlos zu bestrahlen, so daß der durch das Verfahren gegebene Anreicherungsgrad erhalten bleibt.

Dieses neue Verfahren sei nun anhand der Figuren 1 bis 5 theoretisch sowie anhand der Figuren 6 bis 12 anhand eines Ausführungsbeispieles praktisch näher erläutert.

Dieses Verfahren beruht auf einem photochemischen Einquantenprozeß, bei dem $UF_6$-Gas natürlicher oder abgereicherter Isotopenzusammensetzung bei tiefer Temperatur bezüglich 235 $UF_6$ selektiv elektronisch angeregt und über eine photochemische Reaktion in festes $UF_5$ umgewandelt und abgetrennt wird. Im Unterschied zu fast allen anderen Laserisotopen-Trennverfahren wird für ein abgetrenntes Uran 235-Atom nur ein Lichtquant benötigt. Die Zweiquanten-Absorption ist ein sehr viel unwahrscheinlicherer Vorgang als der Einquanten-Absorptionsprozeß.

In der US-Patentschrift 4 003 809, Seite 1, Zeilen 66 - 68, wird erwähnt, daß das $UF_6$ mittels UV-Licht bei normalen Temperaturen nicht selektiv anregbar ist. Lediglich in der deutschen Offenlegungsschrift 2 65 13 06 wird darauf hingewiesen, daß bei niedrigen Temperaturen unter 150 K eine selektive Anregung im UV-Gebiet möglich ist. Nähere Frequenzangaben wurden jedoch nicht gemacht, zumal sich diese Anmeldung im wesentlichen mit der Abkühlungstechnik des zu bestrahlenden Gases und seinem Transport befaßt. Eine Abkühlung mit Hilfe der adiabatischen Entspannung ist dort nicht vorgesehen.

In der Zwischenzeit mit sehr großen technischem Aufwand durchgeführte und äußerst zeitaufwendige spektrometrische Untersuchungen haben tatsächlich ergeben, daß das Spektrum des $UF_6$ im Bereich von 200 - 420 nm, das der elektronischen Anregung entspricht, nirgendwo so strukturiert ist, daß unterschiedliche Lichtabsorption des 235 $UF_6$ und des 238 $UF_6$ möglich ist. Es handelt sich somit bei normalen Temperaturen um ein quasikontinuierliches Spektrum. Obwohl in der Zeitschrift J. Chem. Phys., 65, Seite 2707, (1967), davon berichtet wird, daß bei einer Abkühlung des $UF_6$ in einer Argonmatrix auf 8 K nur ein grobstrukturiertes UV-Spektrum gefunden wird, das keine selektive Anregung des 235 $UF_6$ zuläßt, wurden die erwähnten Spektraluntersuchungen an adiabatisch entspannten und dadurch abgekühlten $UF_6$ weitergeführt. Diese Art der Abkühlung wurde erstmals vorgeschlagen in der bereits erwähnten deutschen Offenlegungsschrift 2 44 77 62. Diesen Untersuchungen zur Ermittlung des UV-Spektrums gingen ausgedehnte Rechnungen voraus.

In der Fig. 1 ist schematisch dargestellt, daß die Infrarotspektren nur durch energetische Übergänge zwischen den unteren Niveaus des elektronischen Grundzustandes zustande kommen, sogenannte Schwingungsübergänge, während UV-Spektren durch energetischen Übergang vom Grundzustand in den elektronisch angeregten Zustand entstehen. Im letzten Fall bewirken die Dichte der Energieunterniveaus im Grundzustand und im angeregten Zustand eine enorme Komplexität des Spektrums und damit ein diffuses, strukturloses Erscheinungsbild, das keine selektive Anregung zuläßt.

In Fig. 2 sind diese Verhältnisse schematisch dargestellt. Die Unterenergieniveaus liegen im unteren Teil des Grund- bzw. angeregten Zustandes voneinander weit getrennt (diskret), nach oben hin rücken sie zusammen und werden "quasikontinuierlich". Der Übergang von einem quasikontinuierlichen oder in ein quasikontinuierliches Gebiet ("b"), ("e") führt immer zu strukturlosen Spektren. Nur der Übergang vom diskreten Zustandsbereich "a" in den diskreten Bereich "d" führt zu diskreten, strukturierten Spektren. Nur in einem solchen strukturierten Spektrum läßt sich der optische Isotopieeffekt beobachten, der die Grundlage des Laserisotopen-Trennverfahrens ist.

Aus Gründen der sogenannten Boltzmann-Verteilung finden bei Raumtemperaturen fast alle Übergänge nach Art A oder B statt. Bei tiefer Temperatur sind die Übergänge des Typs C und D bevorzugt, wobei D der für die Isotopentrennung geeignete Übergang ist. Die Untersuchungen dieses Überganges zeigten, daß sich das Spektrum unterhalb von 75 K zunehmend aufklärt. Dadurch, daß von den vielen tausend "hot bands", die sich gegenseitig überlappen, mit absinkender Temperatur immer mehr ausfallen, tauchen Lücken im Spektrum auf und werden die Bandenkonturen sichtbar.

Bei der Durchführung dieser Versuche wurden das Entspannungsverhältnis und das Erweiterungsverhältnis der verwendeten Düsen zur adiabatischen Entspannung so ausgelegt, daß $UF_6$ bei 30 K spektroskopiert werden konnte. Die Auflösung des Lasers betrug ca. 2 GHz. In dem Bereich von 360 - 410 nm wurden die Versuchsbedingungen so gewählt, daß etwa 100 Strukturen im Spektrum erschienen, von denen ca. die Hälfte für die Zwecke der isotopenselektiven Einstrahlung verwendet werden konnten.

In Fig. 3 ist ein so gemessenes hoch aufgelöstes 238 $UF_6$ Spektrum bei 30 K und bei einer Wellenlänge von 398 nm wiedergegeben. Es besteht aus drei Teilbanden P, Q, R, die ihrerseits aus sogenannten Schwingungsrotationslinien bestehen. Aufgelöst wurden nur die Rotationslinien des P-Zweiges. Das Spektrum des 235 $UF_6$ sieht völlig gleich aus, ist jedoch um 0,2 $cm^{-1}$ nach größeren Wellenzahlen verschoben. Der R-Zweig des 235 $UF_6$ überschneidet sich mit dem des 238 $UF_6$ nicht, wie aus der Fig. 4 hervorgeht, die das Spektrum von 20 %ig am 235 U angereicherten $UF_6$ zeigt. Bei Einstrahlung in diesen R-Zweig der 235 $UF_6$-

Bande, nahe der Wellenlänge 398 nm, wird eine Selektivität von S = 10 erreicht. Dies bedeutet, daß an dieser Stelle die Absorptionswahrscheinlichkeit für 235 $UF_6$ zehnmal größer als für 238 $UF_6$ ist. Trennt man die angeregten Moleküle mit Hilfe einer der später beschriebenen Reaktionen ab, so wird ein Trennfaktor von T = 10 gemessen. Dies bedeutet, daß für die Anreicherung von Natururan auf 3 % U 235 im Vergleich zum Diffusions- bzw. auch Trenndüsen-Verfahren oder Zentrifugen-Verfahren nur eine einzige Trennstufe notwendig ist.

Die bereits erwähnte Wellenlänge für die Uranisotopen-Trennung liegt bei 398 nm. Diese Wellenlänge ist jedoch keine exakte Absolutangabe, da diese von der Eichgenauigkeit des verwendeten Spektrometers abhängt.

Die Fig. 5 zeigt die bei 30 K aufgenommenen $UF_6$-Banden mit einer Auflösung von 20 GHz, wobei deren Lage durch die Nanometer-Angabe gekennzeichnet ist. In der nachstehenden Tabelle ist weiter eine Auswahl der Lagen der wichtigsten $UF_6$-Banden angegeben, die ebenfalls zur Laserisotopenanreicherung des Urans herangezogen werden könnten.

Wellenlängen (in nm) selektiv anregbarer $UF_6$-Banden im UV-Spektrum bei 30 K.

| | |
|---|---|
| 402,6 | 395,1 |
| 400,7 | 394,4 |
| 399,9 | 393,1 |
| 398,3 | 391,3 |
| 398,5 | 390,5 |
| 398,0 | 390,3 |
| 397,8 | 388,8 |
| 397,6 | 387,7 |
| 396,5 | 387,1 |
| 396,2 | 384,0 |
| 395,3 | 382,5 |

Diese hier wiedergegebenen Ergebnisse konnten nur mit einem technischen Aufwand gewonnen werden, der vergleichbar ist mit jenem in der chemischen Industrie bei der Entwicklung spezieller chemischer Verbindungen.

Die bei diesen Frequenzen bzw. Wellenlängen nach Schema D von Fig. 2 ermöglichte Anregung ist der erste Teil des Isotopentrennvorganges. Der zweite Teil ist die durch diese Anregung ermöglichte Abtrennreaktion. Dafür eignen sich prinzipiell die gleichen Reaktionen und Reaktionspartner, wie sie für den sogenannten Infrarot- + UV-Prozeß vorgeschlagen wurden. Bei diesem soll das $UF_6$ durch einen Infrarotlaser selektiv angeregt und durch einen UV-Laser in einen reaktionsfähigen Zustand gebracht werden. Zu diesem Stand der Technik sei auf die DE-OS 27 07 118 und 25 58 983 verwiesen.

Dort wird jedoch nur ganz allgemein von den Reaktionspartnern gesprochen, chemische Verbindungen bestimmter Art werden nicht erwähnt.

An einen solchen Reaktionspartner muß die Anforderung gestellt werden, daß er mit dem nichtangeregten nicht 238 $UF_6$ reagiert, er darf weiterhin bei der anregenden Wellenlänge nicht selber Licht absorbieren, er muß gasförmig sein, um homogene Reaktionen zu ermöglichen, selbstverständlich muß er auch thermisch stabil sein. Diese Anforderungen werden optimal von Wasserstoff erfüllt, der bei Raumtemperatur und selbstverständlich erst recht nicht bei tieferen Temperaturen mit $UF_6$ reagiert. Er reagiert dagegen, wie auch experimentell bestätigt wurde, mit durch UV angeregtem $UF_6$ nach folgenden Reaktionsgleichungen:

$$UF_6 + h\nu \longrightarrow UF_6^* \qquad (1)$$

$$UF_6^* + H_2 \longrightarrow UF_5 + HF + H \qquad (2)$$

$$UF_6 + H \longrightarrow UF_5 + HF \qquad (3)$$

($h\nu$ ist das Symbol für das eingestrahlte Lichtquant)

Pro Lichtquant werden zwei $UF_5$-Moleküle erzeugt. Da nur die Teilreaktion (2) selektiv geführt werden kann, wird die im Spektrum gefundene Primärselektivität des Trennverfahrens auf den halben Wert reduziert. Um jedoch die volle Selektivität zu erhalten, wird zweckmäßig ein sogenannter Wasserstoff-Radikalfänger dem Reaktionsgas zugesetzt. Hierzu ist vor allem Brom geeignet, in einer Konzentration von ca. 5 %, während die Wasserstoffkonzentration bei 10 % liegt. Das dem Laserstrahl zugeführte Reaktionsgemisch besteht damit aus 80 % Helium, 10 % Wasserstoff, 5 % Uranhexafluorid und 5 % Brom. Diese und andere Reaktionen zur Abtrennung der angeregten Stoffe finden sich beispielsweise noch in den deutschen Offenlegungsschriften 25 24 127; 25 36 940; 26 51 306.

Statt Brom könnte auch Chlor, $CO_2$ und Sauerstoff als Wasserstoffradikalfänger verwendet werden. Selbstverständlich sind andere Reaktionspartner oder andere Konzentrationsverhältnisse, als die angegebenen, nicht ausgeschlossen. Die Konzentrationen der Radikalfänger sollten so groß wie möglich sein, müssen aber unterhalb jener Grenze bleiben, bei der Kettenreaktionen ausgelöst werden könnten.

In den Bereich photochemischer Reaktionen gehören jedoch auch solche, die ohne einen eigentlichen an der Reaktion selbst teilnehmenden Partner durch die Laseranregung hervorgerufen werden. Eine solche Reaktion ist die Aufspaltung des $UF_6$ durch Photodissoziation nach den nachstehenden Gleichungen:

$$UF_6 \xrightarrow{h \cdot \nu} UF_6^* \quad (4)$$

$$UF_6^* \longrightarrow UF_5 + F \quad (5)$$

$$F + F \longrightarrow F_2 \quad (6)$$

Das dabei freiwerdende Fluorradikal wird durch Rekombination oder Oberflächenreaktion in der Apparatur gebunden, kann jedoch auch durch Fluorfänger, wie z.B. Wasserstoff, Ozon, $C_2H_6$, $CH_4$, Xenon und andere gebunden werden.

Nach diesen theoretischen Erläuterungen sei nun anhand der Fig. 6 bis 12 eine zur Durchführung dieses Verfahrens geeignete Vorrichtung näher beschrieben, wobei insbesondere auf jene Einrichtung hingewiesen wird, die eine vollständige Bestrahlung der zugeführten Ausgangsstoffe ermöglichen, so daß der durch die eigentliche Trennreaktion bedingte Trennfaktor im Gegensatz zu den meisten aus dem Stande der Technik bekannten Verfahren auch für den laufenden Durchsatz von $UF_6$ in der Praxis erreichbar ist.

Die Fig. 6 zeigt in einer schematischen Übersicht das Zusammenwirken der einzelnen Vorrichtungsteile für die Durchführung dieses Verfahrens. Hier ist zunächst die Gasversorgung zu nennen, diese besteht aus einem Vorrat von Heliumdruckflaschen 1. Das darin befindliche Gas mit der Reinheit 4,7 dient zur Einstellung des Adiabatenkoeffizienten des $UF_6$, das in einem Sublimator 2, dessen Temperatur thermostatisch geregelt wird, verdampft und dem Helium beigemischt wird. Die Verdampfungsleistung des Sublimators beträgt ca. 35 kg $UF_6$ pro Stunde. Entsprechend der Dampfdruckkurve des $UF_6$ kann so dessen Druck zwischen 24 und 107 millibar eingestellt werden. Diese Gasmischung gelangt sodann

über einen Staubfilter 3 zu einem Reduzierventil 51, mit dem der Gesamtdruck eingestellt wird, der beispielsweise bei 1900 millibar liegt. Aus diesem Druckminderventil gelangt das definierte Gemisch von $UF_6$ und Helium - Anteil des $UF_6$ etwa 1-5 % - in die Mischkammer 5. In dieser wird gleichzeitig über ein Druckminderventil 41 der in der Flaschenbatterie 4 bereitgehaltene Reaktionspartner, z.B. Wasserstoff, zugeführt. Die Einströmöffnungen für die Gase sind zweckmäßigerweise tangential angeordnet, so daß die sich ausbildende Rotationsströmung für eine gute Vermischung sorgt. Dieses Gasgemisch, nunmehr mit 52 bezeichnet, gelangt zu einem Schnellschlußventil 6, das im Takte der intermittierenden Laserstrahlung, die den Reaktionsraum 9 durchsetzt, elektrisch gesteuert ist, also öffnet und schließt, zur Entspannungsdüse 7. Im Reaktionsraum 9 findet die Anregung des $UF_6$ durch den über das Fenster 8 ein- und austretenden Laserstrahl statt sowie die bereits vorbeschriebene chemische Reaktion. Das Endprodukt, das aus festem $UF_5$ besteht, wird dann in einem Zyklon bekannter Bauart 10 abgeschieden und gesammelt. Über die Leitung 12 wird dieses Produkt entnommen. Dazu können z.B. Förderschnecken oder andere aus dem Stand der Technik bekannte Einrichtungen, die hier nicht näher dargestellt sind, Verwendung finden. Das nicht umgesetzte $UF_6$ verläßt den Zyklon über die Leitung 11 und gelangt über das Umschaltventil 31 in einen der Desublimatoren 13. Diese entsprechen Ausfrieranlagen bekannter Bauart, siehe z.B. die deutsche Offenlegungsschrift 22 47 229, wie sie z.B. in Konversionsanlagen bei der $UF_6$-Herstellung verwendet

werden. Die Größe dieser Desublimationsanlage entspricht der Größe des Sublimators 2 und genügt also in diesem Falle einer $UF_6$-Abscheidung von 35 kg pro Stunde. Zweckmäßig werden zwei solcher Desublimatoren 13 vorgesehen, die so geschaltet sind, daß der erste Desublimator zum Ausfrieren verwendet wird, während der zweite von der Trennanlage abgetrennt und auf Erwärmung geschaltet wird, so daß das abgereicherte $UF_6$ über die Abfüllgefäße 17 die Anlage verläßt. Der verbleibende Gasstrom gelangt nach Passieren einer Staubfilterbatterie 14 über die Pumpenanggregate 15 in ein Sammelgefäß 18 und kann von dort aus wieder in den Prozeß zurückgeführt werden.

Da die Pumpen stets mit gleicher Saugleistung arbeiten, das Schnellschlußventil 6 aber immer Wolken des Gasgemisches in den Reaktionsraum 9 einläßt, sind Druckausgleichsbehälter vorzusehen, die für eine erhöhte kurzfristige Pumpenleistung während der Öffnungszeit der Schnellschlußventile sorgen. Die Größe dieser Behälter muß so ausgelegt werden, daß der vorgeschriebene Enddruck innerhalb von 10 % konstant bleibt, was in diesem Falle mit einem Volumen von 30 $m^3$ erreicht wird. Vorzugsweise wird der Zyklon 10 zur $UF_5$-Abscheidung so groß ausgelegt, daß er dieses Volumen umfaßt, also besondere Behälter für diesen Zweck nicht notwendig sind. An dieser Stelle sei außerdem darauf hingewiesen, daß selbstverständlich auch mehrere Zyklone beispielsweise hintereinander geschaltet werden können, wobei der erste der Abscheidung des $UF_5$ dient und die nächsten als Staubfilter und gleichzeitig als Ausgleichsgefäße

wirken. Auf diese Weise kann der erste Zyklon für diese Aufgabe als $UF_5$-Abscheider optimiert werden, ohne Rücksicht auf die Volumenforderung an den Ausgleichsbehälter.

Als Pumpen 15 sind Aggregate mit einer Gesamtleistung von 15000 $m^3$/Stunde für dieses Beispiel vorgesehen. Beim Enddruck von 1 millibar empfiehlt sich der Einsatz von Rootspumpen, die in diesem Druckbereich besonders energiesparend arbeiten. Selbstverständlich läßt sich die Pumpleistung in dem Maße reduzieren, in dem eine Druckrückgewinnungsvorrichtung bekannter Bauart im Reaktionsraum 9 vorgesehen wird, siehe z.B. die DE-OS 25 36 940.

Eines der wesentlichsten Elemente dieser Vorrichtung ist die Entspannungsdüse, wie sie beispielsweise in Fig. 7 in perspektivischer Ansicht dargestellt ist. Sie besteht aus den Düsenkörpern 71, die so gegeneinander angeordnet sind, daß auf der Gaseintrittsseite 52 die Engstelle 72 vorgesehen ist mit einer Weite von etwa 100 $\mu$m. Die Düsenwände erweitern sich anschließend unter einem Winkel $\alpha$, etwa von $5^\circ$, so daß die Ausgangsöffnung eine Weite von etwa 2 mm besitzt. Die Länge des Düsenkörpers 71 beträgt dabei etwa 5 mm und die Breite des Düsenspaltes 74 etwa 10 m. Da eine Düse dieser Dimensionierung über diese Breite mit der geforderten Präzision kaum herstellbar ist, ist sie aus einzelnen Düsenkörpern 71, wie dargestellt, aufgebaut, die nebeneinander ausgerichtet montiert werden.

Eine Variante dieser Düse ist in der Fig. 10 dargestellt. Zur Verhinderung der schädlichen Grenzschichtwirkungen in einer derartig kleinen Düse wird hier über die Kanäle 75 ein Hilfsgasstrom aus Helium zugeführt, der die Grenzschicht bildet und entsprechend Fig. 11 an der eigentlichen Bestrahlungszone 85, durch die die Laserstrahlung hindurchgeht, vorbeiläuft. Auf diese Weise wird dann dafür gesorgt, daß das ganze $UF_6$ durch diese Bestrahlungszone 85 hindurchläuft und damit die Effektivität des Anreicherungsverfahrens nicht geschmälert wird. Eine derartige Düsenkonstruktion ist ebenfalls bereits bekannt, siehe die DE-OS 28 05 958, Fig. 7. Bei gleicher Größe dieser Düse, wie in Fig. 7, beträgt hier die Dicke der Grenzschicht, die durch zugeführtes Helium gebildet wird, 0,5 mm, so daß die Weite des austretenden $UF_6$-Gasstrahles 1 mm beträgt. Die Gaszuführungen 75 für das Hilfsgas bestehen aus feinen Bohrungen, die in Abständen von 3-5 mm in der Breite der Düse angeordnet sind. Der Durchmesser der Bohrungen beträgt dabei etwa 50 $\mu$m.

Der durch die Düse hindurchströmende Gasstrom 52 wird, wie bereits erwähnt, über das Schnellschlußventil 6 gesteuert. Dieses sitzt entsprechend der Fig. 9 direkt vor der Engstelle 72 der Düse, damit der Totraum 64 möglichst klein gehalten werden kann. In diesem Beispiel besteht das Schnellschlußventil 6 aus einem Stempel 61, der in geschlossenem Zustand auf der Dichtkante 63 des Düsenträgers 62 aufliegt. Auf diesen Träger 62 sind die Düsen 7 in nicht weiter dargestellter Weise montiert und ausgerichtet. Die Betätigung des Ventilstempels 61 erfolgt, wie in Fig. 6 schematisch angedeutet, elektromagnetisch. Selbstverständlich könnten auch andere

Konstruktionen für dieses Schnellschlußventil Verwendung finden. In diesem Zusammenhang sei auf die DE-OS 28 10 791 verwiesen. Für alle derartigen Konstruktionen gilt, daß der Totraum zwischen dem Schnellschlußventil und dem Düsenspalt so klein als irgend möglich, jedenfalls im Querschnitt kleiner als 10 Quadratmillimeter gehalten wird.

In der Fig. 7 wurde eine Düse mit 10 m Breite dargestellt und bereits erwähnt, daß die Herstellung derselben nicht ganz einfach ist. Die Länge von 10 m ergibt sich aus der Forderung, wenigstens 90 % des Laserlichtes bei einem dreifachen Lichtweg durch den Gasstrahl zur Absorption zu bringen. Dies kann aber auch erreicht werden, wenn man mehrere Düsen übereinander anordnet, z.B. in 5 Lagen zu je 2 m, wie es in der Fig. 8 skizziert ist. Selbstverständlich muß dann für jede dieser übereinander angeordneten Düsen ein eigenes Schnellschlußventil 6 vorgesehen werden. In diesem Falle ist es dann notwendig, den Laserstrahl 81 über Spiegel 82 und 83 in der dargestellten Weise vor den Einzeldüsen 7 vorbeizuführen. Das Gasgemisch 52 wird hinter den Düsen auf einen Enddruck von 3 millibar entspannt und erreicht dabei eine Endtemperatur von 30 K bei einer $UF_6$-Dichte von $3{,}4 \times 10^{16}\ cm^{-3}$. Der Massendurchsatz an $UF_6$ für eine solche Düse liegt bei etwa 1,14 kg $UF_6$ pro Stunde und cm Düsenlänge. Um dieses Material photochemisch umzusetzen, müßte ein kontinuierlich arbeitender Laser mit einer Leistung von 50 kW zur Verfügung stehen oder ein gepulster Laser gleicher Durchschnittsleistung mit

einer Frequenz von 80 kHz. Da solche Laser aber zur Zeit noch nicht praktisch verfügbar sind, müssen mehrere Lasergeräte parallel betrieben werden mit denen die Düsen, wie bereits erwähnt und in der bereits genannten Offenlegungsschrift P 28 10 791 vorgeschlagen, über die Schnellschlußventile mit den Laserimpulsen synchronisiert sind. In diesem speziellen Beispiel ist vorgesehen, daß der Gasstrahl nach dem Verlassen der Düsen von vielen Lasern auf einer in Fig. 11 gezeigten Fläche 85 von 1 mm x 10 mm bestrahlt wird. Der an sich rotationssymmetrische Laserstrahl wird durch ein bekanntes, hier nicht näher zu beschreibendes System von Zylinderlinsen, siehe Fig. 12, Bezugszeichen 88, auf diesen Querschnitt gebracht. Jeweils eine Anzahl von n-Lasern (vorzugsweise n = 10) wird optisch synchronisiert eingestrahlt. Das bedeutet, daß die Laserimpulse gleichzeitig ausgesandt werden, ihre Strahlen aber bis zur Vereinigung auf dem erhabenen Spiegel 87, siehe Fig. 12, um jeweils 3 m unterschiedliche Wege zurücklegen, derart, daß Laser 2 gegenüber Laser 1 zusätzlich 3 m Lichtweg zurücklegt, Laser 3 gegenüber Laser 2 ebenfalls weitere 3 m zurücklegt usw. Diese Verzögerungsstrecke bewirkt damit eine zeitliche Aufeinanderfolge der Laserimpulse im Abstand von je 10 Nanosekunden, was genau der Pulslänge des Lasers entspricht. Bei anderen Pulslängen des Lasers sind die Verzögerungswege dann entsprechend zu ändern. Praktisch bedeutet dies, daß die Bestrahlungsdauer je gezündeter Lasergruppe n mal so groß ist wie die Einzelimpulsdauer. Dieses System besteht aus einer Anzahl von Hohlspiegeln 86, die jeweils einem Laser 85 zugeordnet sind und die von diesen ausgehenden Laserimpulse mit unterschiedlichen Weglängen auf den erhabenen Spiegel 87 konzentrieren. Die Verspiegelung dieser Teile liegt bei 99,7 % oder höher für die verwendete Wellenlänge. Die Lichtstrahlen sind dabei derartig aufgeweitet, daß die Verlustleistung an den Spiegeln von weniger als 0,3 % über den Spiegelkörper abgeführt werden kann. Der den erhabenen Spiegel 1 verlassende Laserstrahl 81 gelangt über das bereits erwähnte optische System 88 durch Brewsterfenster 8, siehe Fig. 6, aus $CaF_2$ in den Bestrahlungsraum 85. Am Ende der Bestrahlungsstrecke, die geradlinig sein kann oder auch nach Fig. 8 entsprechend der übereinander angeordneten Düsen 7 verläuft, befindet sich ein Rücklenkspiegel 84 derart, daß der gebündelte Laserstrahl die gesamte Düsenstrecke dreimal durchquert. Optiken, die zur Verbesserung der Strahlenqualität dienen, sind allgemein bekannt und hier der Übersichtlichkeit halber nicht weiter dargestellt.

Anstelle von Umlenkspiegeln vor und hinter der gesamten Düsenstrecke kann sich die Anlage auch entsprechend DE-OS 24 24 728 innerhalb eines optischen Resonators befinden, dann hat der Endspiegel einen Reflektionsfaktor von mindestens 99,7 %, der Einkoppelspiegel ist teildurchlässig derart, daß die Verstärkung innerhalb des Resonators 3 vor sich geht. Die Entkoppelung zwischen diesem Resonator und den Lasersystemen erfolgt in bekannter Weise mittels Polarisationsfilter und $\lambda/4$-Platte.

Die bisher erwähnte und in Fig. 12 in ihrem Zusammenwirken dargestellte Laserbatterie kann selbstverständlich mehrfach angeordnet werden, wobei dann die nächste

Laserbatterie am Ende der Laufzeit, der aus der ersten Batterie kommenden Laserstrahlung gezündet wird, so daß auf diese Weise die Bestrahlungsdauer wiederum verlängert bzw. vervielfacht werden kann. Die von diesen weiteren Laserbatterien ausgehenden Strahlungen werden dabei zweckmäßig auf den in Fig. 12 beschriebenen Spiegel 87 gerichtet und nehmen von dort den gleichen Weg zur Bestrahlungszone 85 (Fig. 11).

Die elektronischen Schaltungen zur synchronisierten Auslösung der Laserbatterien sind allgemeiner Stand der Technik, so daß es sich erübrigt, hierüber nähere Angaben zu machen. Es soll nur darauf hingewiesen werden, daß die Stromversorgungen dieser Lasersysteme zweckmäßigerweise zu Großeinheiten zusammengefaßt werden und daß besonderes Augenmerk auf die Stabilisierung der Wellenlänge sowie die Genauigkeit derselben über die vielen einzelnen Lasergeräte hinweg gerichtet werden muß. Denn letzten Endes steht und fällt die Effektivität einer derartigen Anreicherungsanlage mit der Einhaltung der einmal ermittelten Absorptions- bzw. Anregungsfrequenz.

Abschließend sei erwähnt, daß eine Uran-Isotopenanreicherung mit Lasern nur dann einen technischen Fortschritt bedeutet, wenn der photochemische Prozeß im großen Maßstab durchführbar ist. Diese Voraussetzung ist mit dem hier beschriebenen Verfahren gegeben. In diesem Zusammenhang sei erwähnt, daß die jährliche Menge an nachzuladendem Kernbrennstoff für Druck- und Siedewasser-Kernreaktoren ca. 30 kg auf 3 % angereichertes

Uran pro Megawatt elektrischer Leistung des Reaktors beträgt. Bei Reaktoren mit der heute üblichen Ausgangsleistung von $10^3$ MW beträgt also die jährliche Nachladung 30 t Kernbrennstoff.

Die Anreicherung in diesem Maßstab muß aber nicht nur möglich sein, sie muß aber auch von den Anreicherungskosten her wirtschaftlicher als die bisher bekannten Verfahren sein. Ausgedehnte Berechnungen, angefangen von den benötigten Laserleistungen bis hin zu den Pumpenleistungen und deren Kosten haben ergeben, daß der nach diesem Verfahren und mit diesen Anlagen erreichbare Trennarbeitspreis bei etwa DM 14,--/kg SWU, also etwa um den Faktor 10 unter den bisher üblichen Trennkosten liegt. Durch den Einsatz der bereits erwähnten Rootspumpen können sich die elektrischen Pumpkosten dabei noch um den Faktor 5 senken. Von gleicher Bedeutung wie die Kosten ist der je SWU benötigte Energiebedarf. Der nachstehende Vergleich zeigt auch hier den Vorteil dieses Laser-Verfahrens:

| | | |
|---|---|---|
| Diffusion | ca. | 3000 KWh/kg SWU |
| Zentrifuge | ca. | 300 KWh/kg SWU |
| Laser | | 20 KWh/kg SWU |

Selbstverständlich kann das hier beschriebene Verfahren variiert werden, wesentlich ist jedoch die adiabatische Entspannung, die Anregung mit UV-Licht bestimmter Frequenz, die Taktung des Stoffgemischstrahles mit Hilfe eines Schnellschlußventiles sowie die Verlängerung der Bestrahlungsdauer durch die Verwendung von Verzögerungsstrecken zur zeitlichen Summation der von gleichzeitig

gezündeten Lasern ausgehenden Impulse sowie evtl. zusätzlich des Einsatzes mehrerer derartiger Laserbatterien zur Verlängerung des Bestrahlungszeitraumes des Stoffgemisches und damit zur Vereinfachtung der Arbeitsweise des Schnellschlußventiles. Selbstverständlich könnten auch zur Erhöhung der Laserleistung jeweils mehrere einzelne Lasergeräte parallel betrieben werden.

7 Patentansprüche
12 Figuren

Patentansprüche

1. Verfahren zur Erzeugung einer am Isotop U 235 angereicherten, für die Herstellung von Kernbrennstoffen für Kernreaktoren geeigneten Uranverbindung, wobei als Ausgangsstoff gasförmiges, natürliches oder abgereichertes Uran in seiner Verbindung $UF_6$ sowie ein ebenfalls gasförmiger Reaktionspartner verwendet wird und eine Laserstrahlung eine isotopenselektive Anregung bei einer Temperatur unter 100 K zur Auslösung photochemischer Reaktionen bewirkt und die Trennung der Reaktionsprodukte auf physikalischem Wege erfolgt, dadurch gekennzeichnet, daß die Ausgangsstoffe mit einem Zusatzgas zur Einstellung des Adiabatenkoeffizienten jeweils für die Dauer von wenigstens einem aus optisch und elektrisch verzögerten Teilstrahlen zusammengesetzten Laserstrahlimpuls adiabatisch auf unter 50 - 100 K in einer Düse entspannt werden, diese die Düse verlassende "Wolke" vollständig mit einer, aus den in der Beschreibung angegebenen Spektren entnehmbaren, Wellenlänge (Bande bei 398 nm) bestrahlt wird und das entstehende am Isotop 235 U angereicherte $UF_5$ als Feststoff auf physikalischem Wege abgesondert und die nicht umgewandelten Stoffe durch Kondensation in bekannter Weise rückgewonnen werden.

2. Verfahren nach Anspruch 1, dadurch gekennzeichnet, daß als Reaktionspartner Wasserstoff verwendet wird.

3. Verfahren nach Anspruch 1 und 2, d a d u r c h g e k e n n z e i c h n e t , daß als Zusatzgas Helium verwendet wird.

4. Verfahren nach Anspruch 1, d a d u r c h g e k e n n z e i c h n e t , daß aus den im UV-Bereich liegenden geeigneten Anregungswellenlängen bevorzugt jene bei 398 nm verwendet wird.

5. Verfahren nach Anspruch 1 - 4, d a d u r c h g e k e n n z e i c h n e t , daß eine Gruppe von gleichzeitig gezündeten Lasern gleicher Frequenz eingesetzt wird und die einzelnen Laser mit Hilfe einer optischen Verzögerungsleitung nacheinander die "Wolke" durchstrahlen.

6. Verfahren nach Anspruch 5, d a d u r c h g e k e n n z e i c h n e t , daß mehrere solcher Lasergruppen eingesetzt und zur Verlängerung der Bestrahlungsdauer im durch die Verzögerungsleitungen vorgegebenen zeitlichen Abstand gruppenweise nacheinander gezündet werden.

7. Verfahren nach den Ansprüche 1 - 3, d a d u r c h g e k e n n z e i c h n e t , daß die Öffnungszeit der Düse, die auch aus mehreren Einzeldüsen aufgebaut sein kann, der durch Zahl und Dauer der nacheinander wirksam werden einzelnen Laserimpulse erreichbaren Bestrahlungszeit entspricht und mit dieser synchronisiert wird.

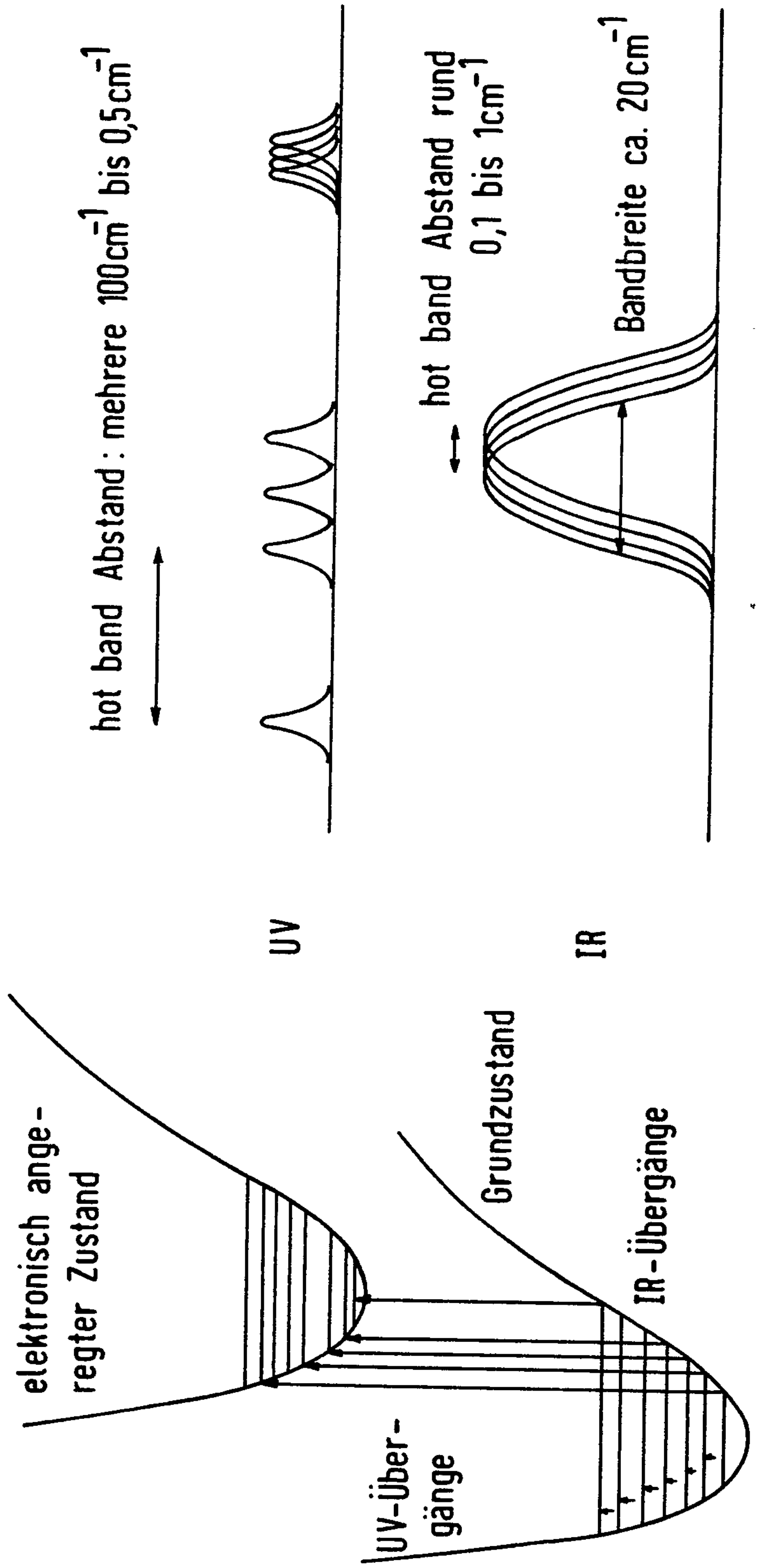
hot band Abstand : mehrere 100$cm^{-1}$ bis 0,5$cm^{-1}$
hot band Abstand rund 0,1 bis 1$cm^{-1}$
Bandbreite ca. 20$cm^{-1}$
UV
IR
elektronisch ange-
regter Zustand
Grundzustand
IR-Übergänge
UV-Über-
gänge

FIG 1

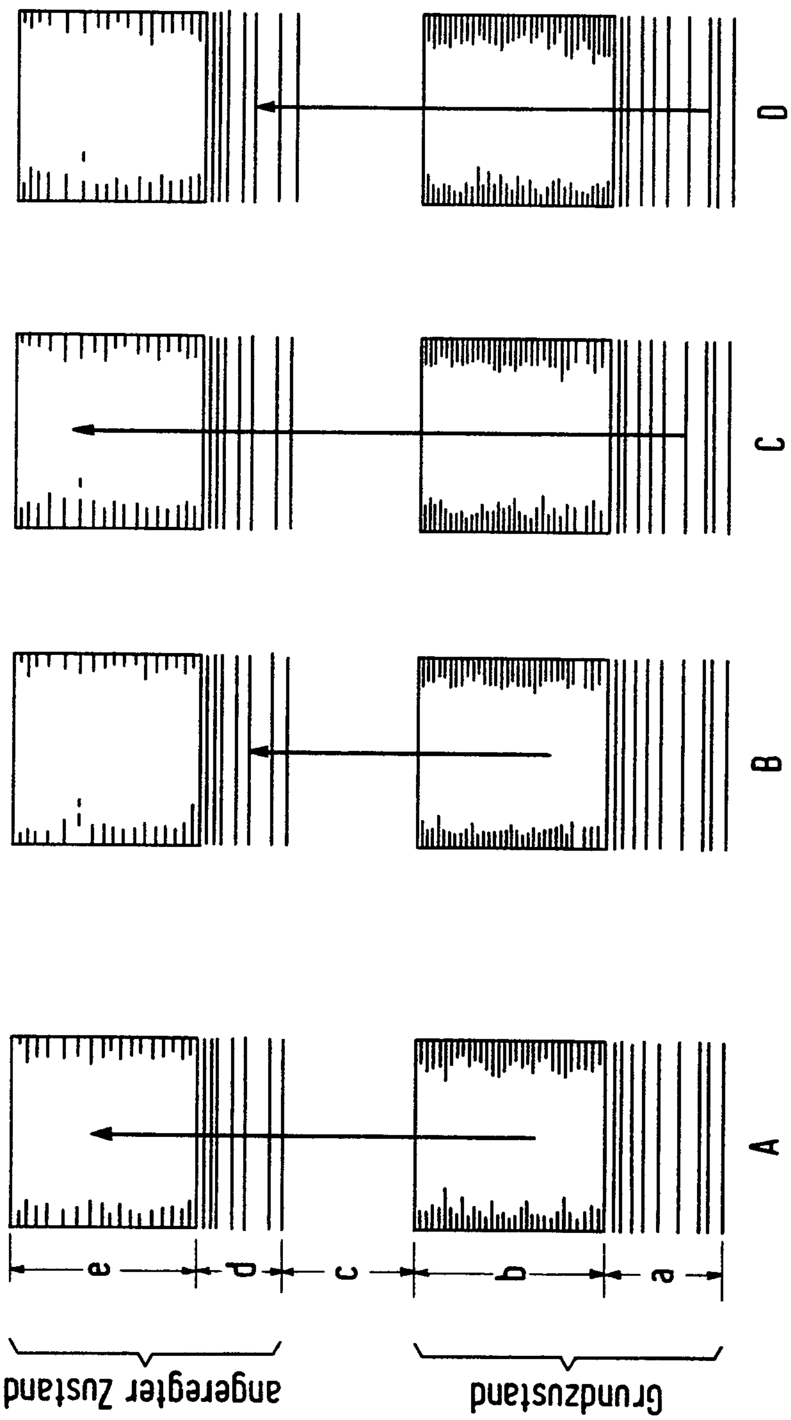


FIG 2

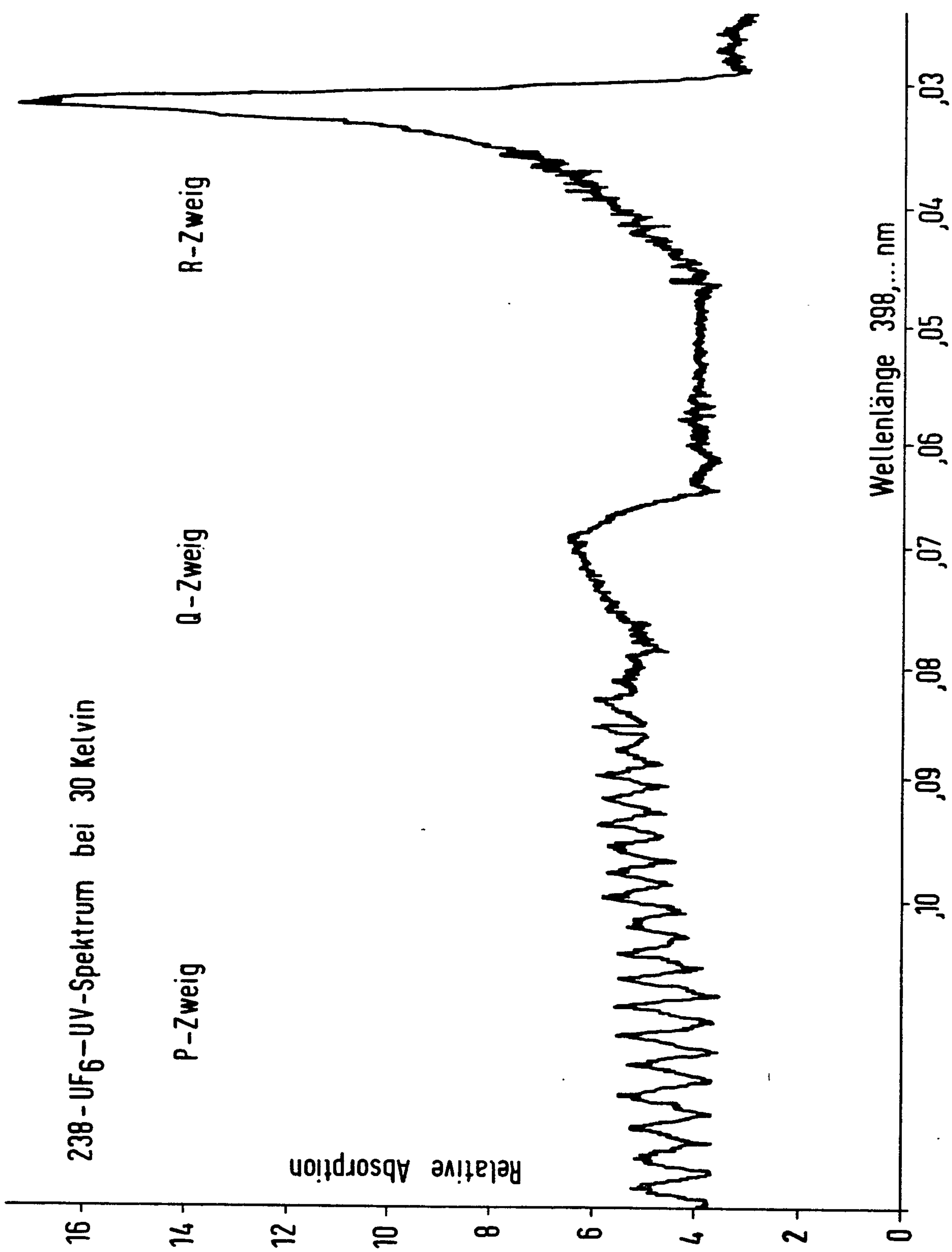
238-UF6-UV-Spektrum bei 30 kelvin
P-Zweig
Q-Zweig
R-Zweig
Relative Absorption
0
2
4
6
8
10
12
14
16
,10
,09
,08
,07
,06
,05
,04
,03
Wellenlänge 398,... nm

FIG 3

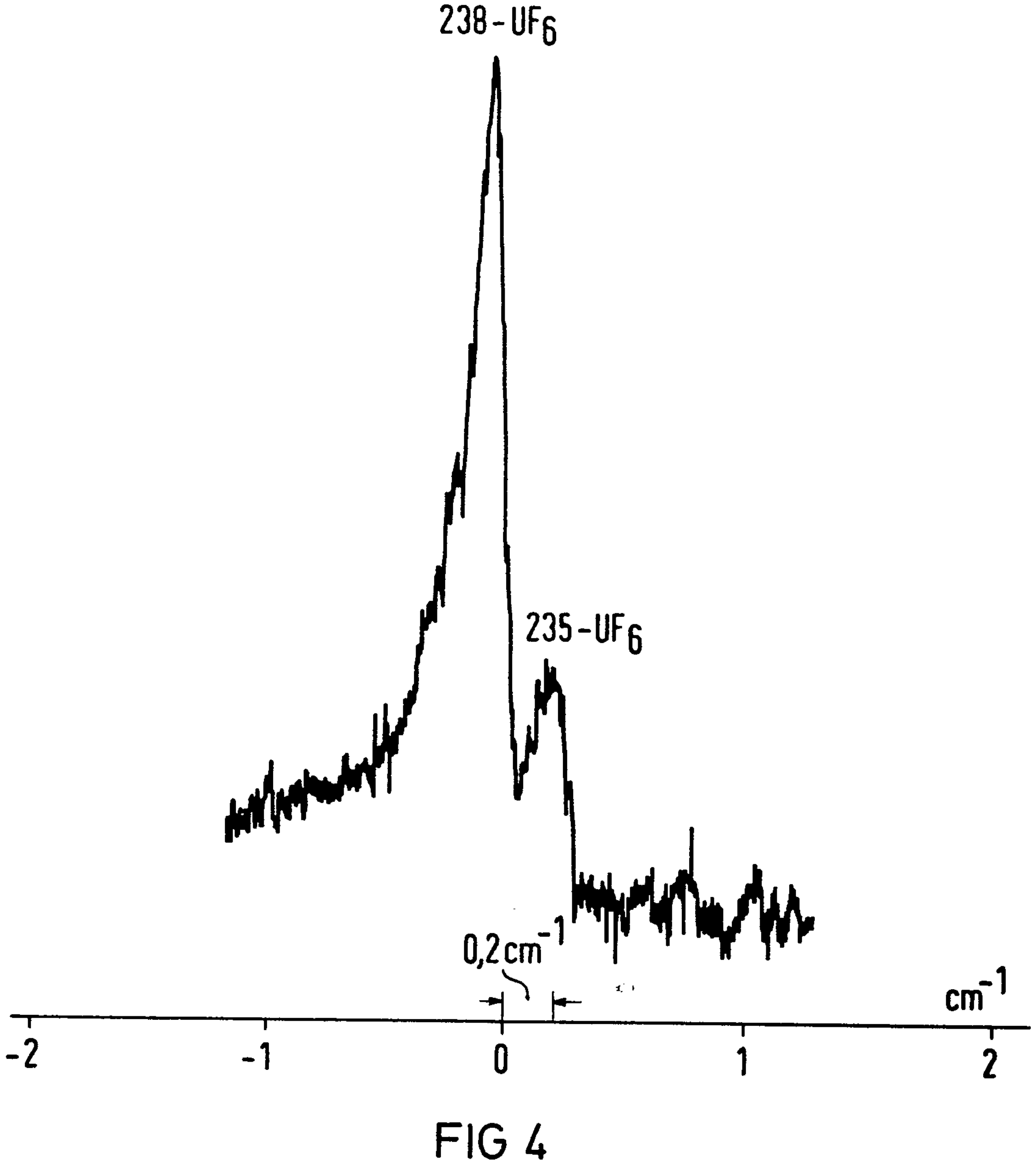


FIG 4

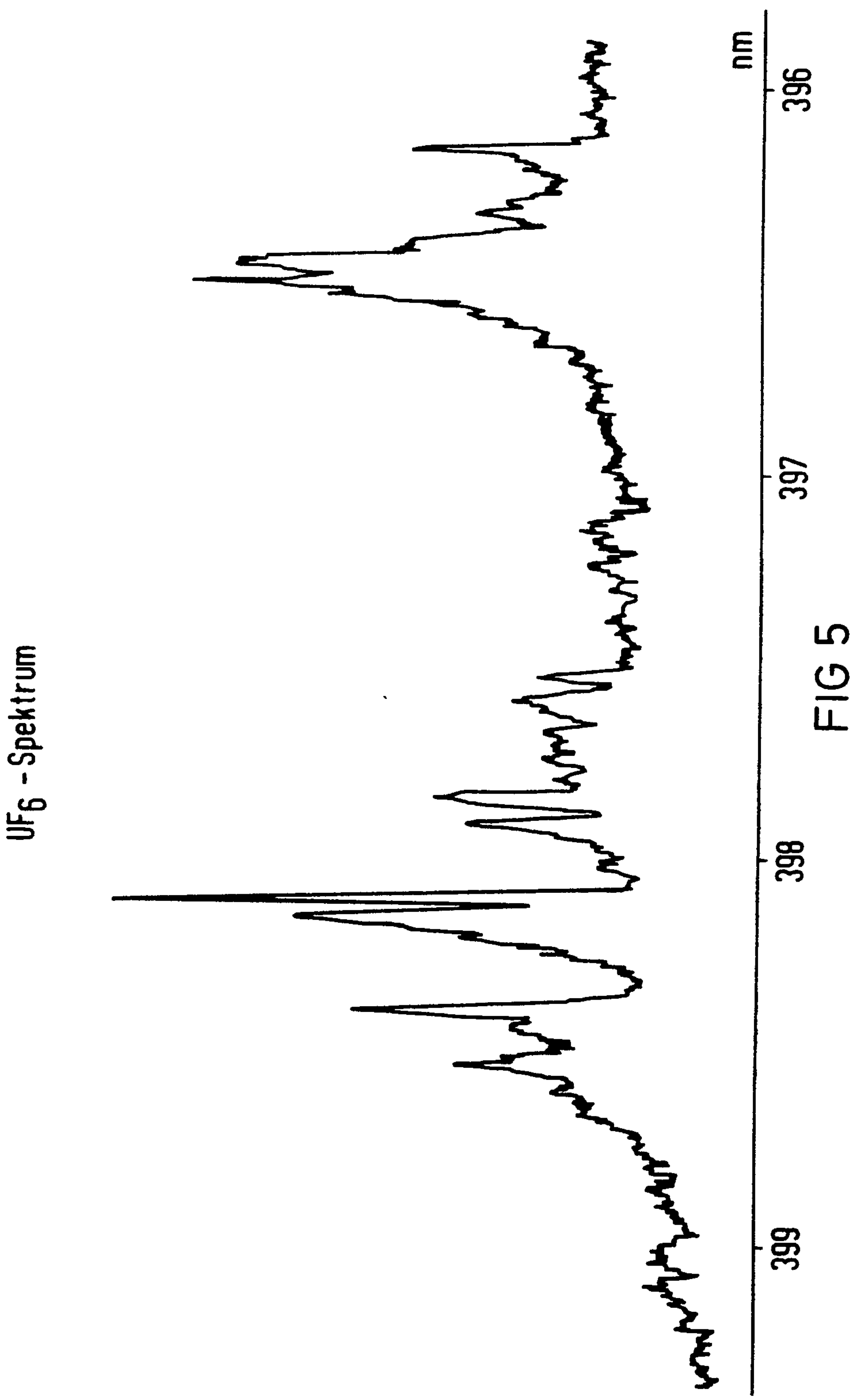


FIG 5

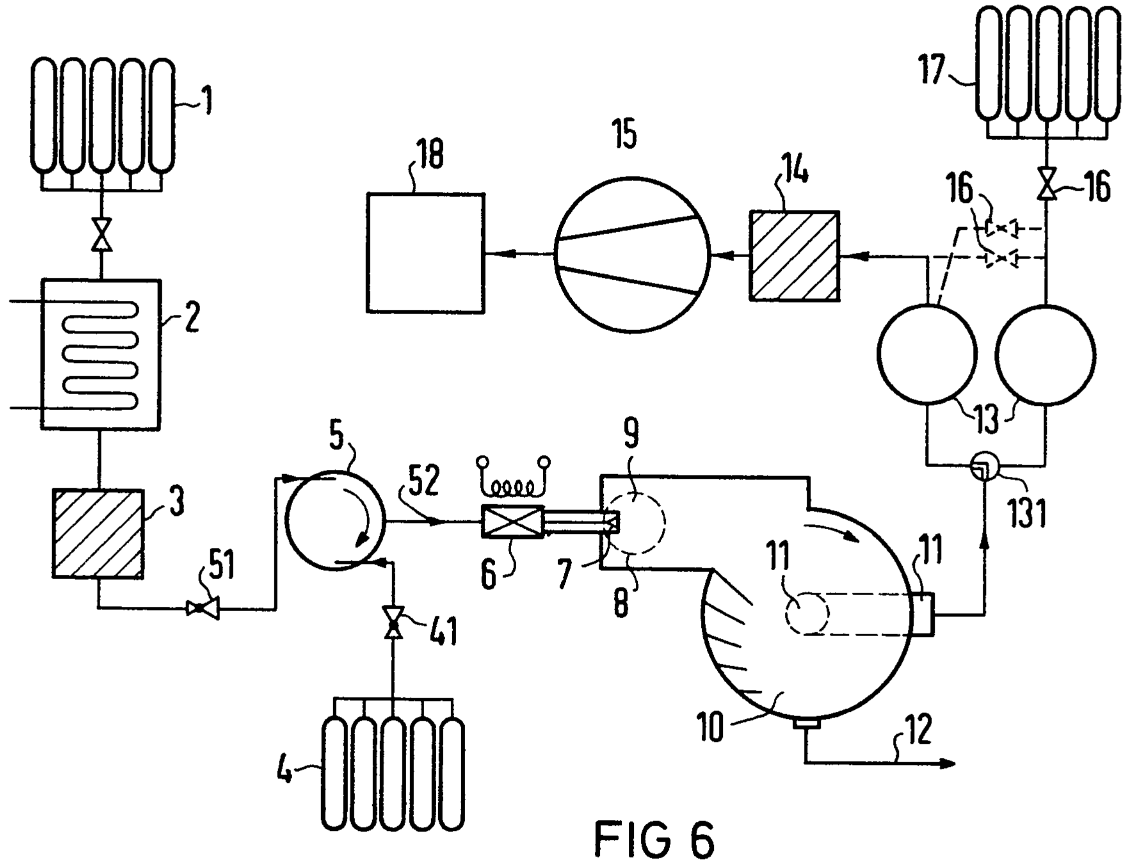
1
2
3
4
41
5
51
52
6
7
8
9
10
11
11
12
13
131
14
15
16
16
17
18

FIG 6

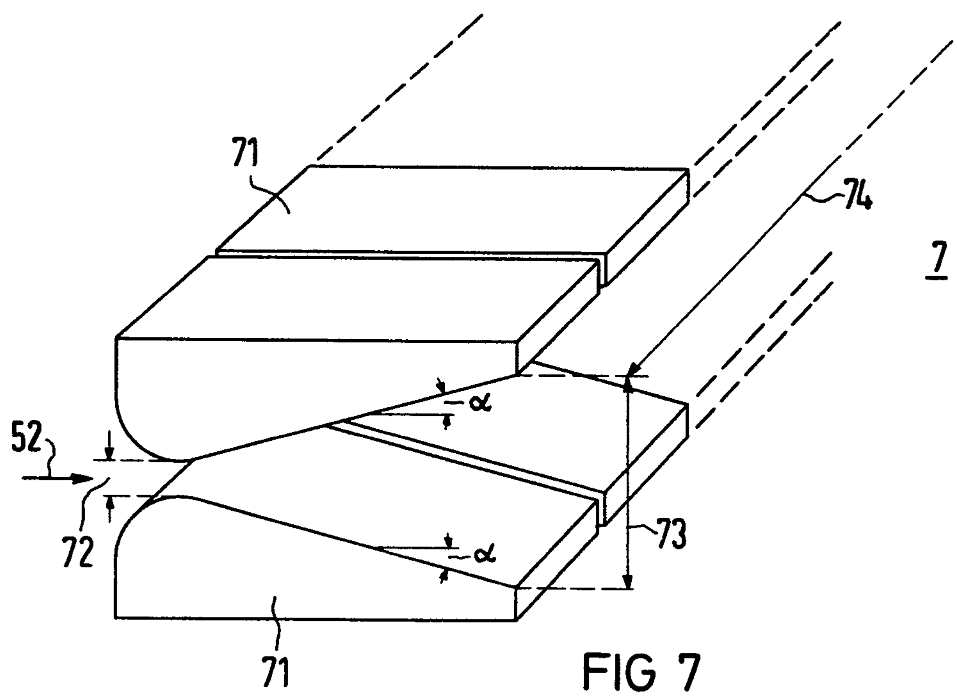
71
71
72
73
74
52
α
α
7

FIG 7

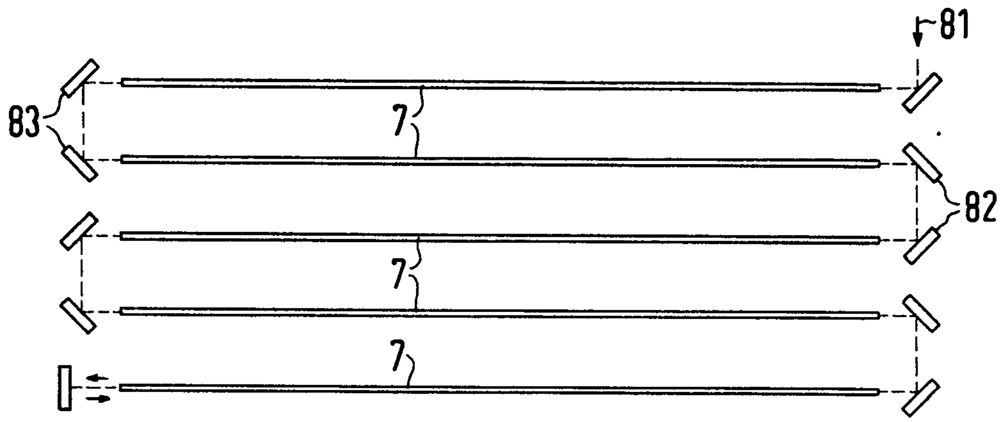


FIG 8

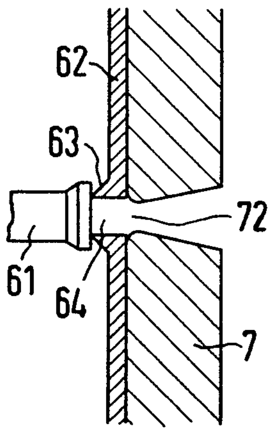


FIG 9

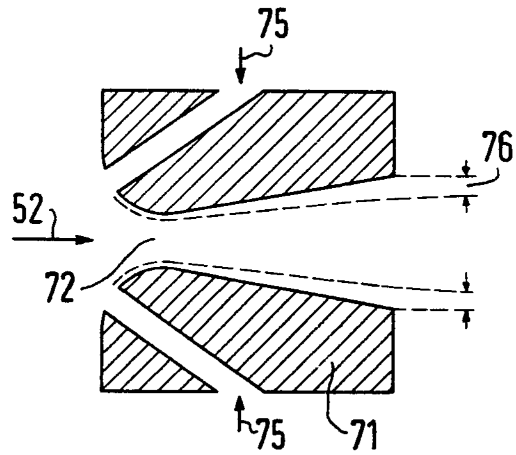


FIG 10

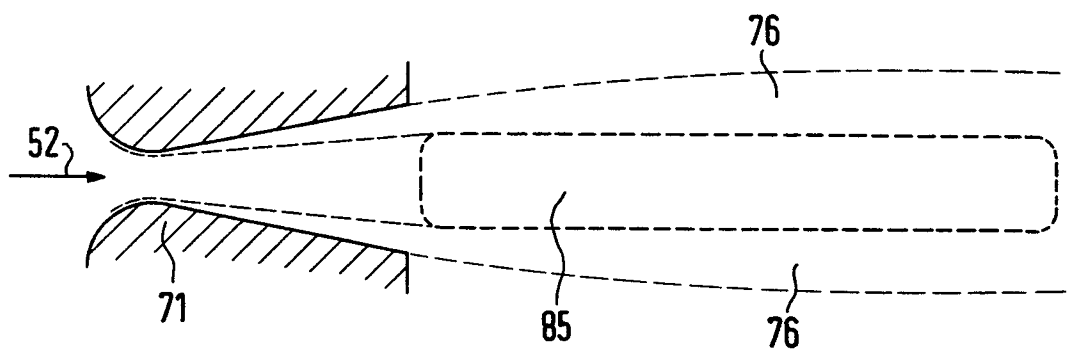


FIG 11

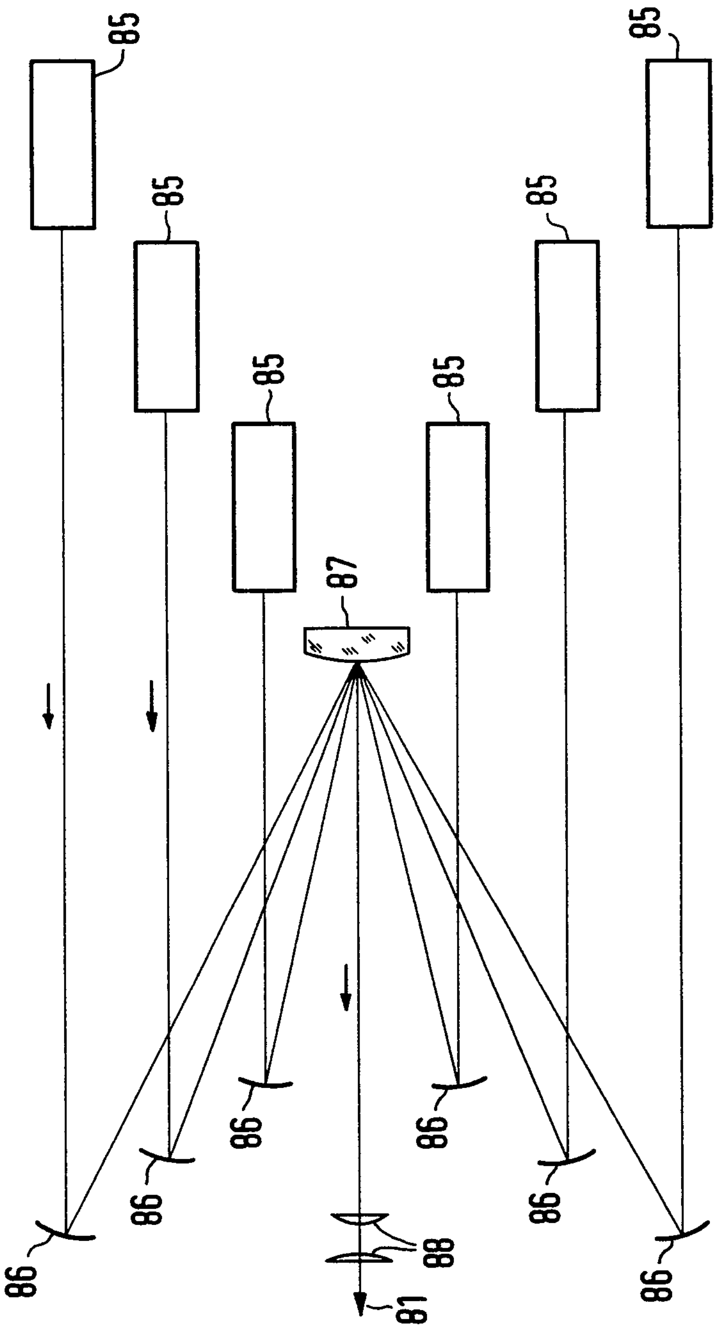


FIG 12

Europäisches Patentamt

**EUROPÄISCHER RECHERCHENBERICHT**

0032693

Nummer der Anmeldung

EP 81 10 0127

| EINSCHLÄGIGE DOKUMENTE | | | KLASSIFIKATION DER ANMELDUNG (Int. Cl.) |
|---|---|---|---|
| Kategorie | Kennzeichnung des Dokuments mit Angabe, soweit erforderlich, der maßgeblichen Teile | betrifft Anspruch | |
| A | GB - A - 2 016 795 (KRAFTWERK UNION)<br>* Ansprüche 1-3,7,8 *<br>& DE - A - 2 810 791<br>-- | 1,5 | B 01 D 59/34 |
| A | FR - A - 2 375 898 (KRAFTWERK UNION)<br>* Ansprüche 1,8 *<br>& DE - A - 2 659 590<br>-- | 1 | RECHERCHIERTE SACHGEBIETE (Int. Cl.) |
| A | FR - A - 2 336 166 (USERDA)<br>* Ansprüche 1,2 *<br>& DE - A - 2 653 795<br>---- | 1 | B 01 D 59/34<br>59/50<br>59/60 |
| | | | KATEGORIE DER GENANNTEN DOKUMENTE<br>X: von besonderer Bedeutung<br>A: technologischer Hintergrund<br>O: nichtschriftliche Offenbarung<br>P: Zwischenliteratur<br>T: der Erfindung zugrunde liegende Theorien oder Grundsätze<br>E: kollidierende Anmeldung<br>D: in der Anmeldung angeführtes Dokument<br>L: aus andern Gründen angeführtes Dokument<br>&: Mitglied der gleichen Patentfamilie, übereinstimmendes Dokument |
| X | Der vorliegende Recherchenbericht wurde für alle Patentansprüche erstellt. | | |

| Recherchenort | Abschlußdatum der Recherche | Prüfer |
|---|---|---|
| Den Haag | 15-04-1981 | NICOLAS |